# EUROPEAN PATENT APPLICATION

(11) **EP 4 454 754 A1**
(43) Date of publication of application: **30.10.2024**
(21) Application number: 22911224.8
(22) Date of filing: 20.12.2022
(51) Int. Cl.: B01J 20/22, B01J 20/28, C01B 37/02

(54) **AMINO COMPOUND-SUPPORTING POROUS SUBSTRATE AND ACIDIC GAS ABSORBENT**

(30) Priority: 22.12.2021 JP 2021208352
(71) Applicant: Mitsui Mining & Smelting Co., Ltd., Shinagawa-ku Tokyo 141-8584 (JP)
(72) Inventor: KOGAWA, Takahiro, Ageo-shi, Saitama 362-0021 (JP); OSAKO, Takao, Ageo-shi, Saitama 362-0021 (JP)
(74) Representative: Novagraaf Technologies
(86) International application number: PCT/JP2022/046882
(87) International publication number: WO 2023/120522

(57) **Abstract**

An amino compound-supported porous substrate includes: a porous substrate 1 including at least macropores 2; and an amino compound supported in at least some pores of porous substrate 1. Porous substrate 1 has a total pore volume per unit volume of the porous substrate of 0.55 mL/mL or more and 0.95 mL/mL or less, as determined by mercury porosimetry. Porous substrate 1 preferably has a skeleton 3 containing an element selected from the group consisting of silicon, aluminum, tin, cerium, titanium, and zirconium.

## Description

### Technical Field

The present invention relates to a porous substrate that supports an amino compound, and an acid gas adsorbent material that includes the porous substrate.

### Background Art

Along with an increase in the awareness of environmental issues, emission of carbon dioxide, nitrogen oxides such as NO and NO₂, and sulfur oxides such as SO and SO₂ contained in exhaust gas has been considered as a problem in recent years. For example, technology for separating and recovering carbon dioxide, which is one of the causes of global warming, is attracting attention, and studies are being conducted on a technique for separating and recovering carbon dioxide emitted from thermal power plants and steel plants. One of known techniques for separating and recovering carbon dioxide is a method involving use of a carbon dioxide adsorbent material composed of a porous material and an amino compound supported thereon.

For example, Patent Literature 1 discloses an amino compound-supported porous substrate for adsorbing carbon dioxide, the amino compound-supported porous substrate obtained by exposing a porous substrate including mesopores to an atmosphere including an amino compound of a gas phase to thereby cause the amino compound to be supported in the mesopores.

Patent Literature 2 discloses a carbon dioxide adsorbent material including: a gas-adsorbing material including an amino compound; a hydroxyl-containing additive including glycerol or the like; and a porous support impregnated with the gas-adsorbing material.

### Citation List

### Patent Literature

Patent Literature 1: JP 2015-113337A
Patent Literature 2: WO 2016/154278A1

### Summary of Invention

However, the carbon dioxide adsorbent material having a porous substrate (in particular, a porous substrate including mesopores) has unfortunately a limit of variation in the type of compound that can be supported. In addition, the carbon dioxide adsorbent material has another problem, and specifically, the amount of the amino compound that contributes to carbon dioxide adsorption performance is small relative to the total amount of the amino compound supported, in light of diffusibility and flowability of gas that flows through the porous substrate.

Accordingly, it is an object of the present invention to provide an amino compound-supported porous substrate in which the amino compound can be any of various types and in which the proportion of the amount of the amino compound that contributes to adsorption performance in the total amount of the amino compound supported is higher than that of a conventional adsorbent material that supports the same amino compound.

The present invention provides an amino compound-supported porous substrate comprising:
a porous substrate including at least macropores; and
an amino compound supported in at least some pores of the porous substrate,
wherein the porous substrate has a total pore volume per unit volume of the porous substrate of 0.55 mL/mL or more and 0.95 mL/mL or less, as determined by mercury porosimetry.

Also, the present invention provides an acid gas adsorbent material including the amino compound-supported porous substrate described above.

### Brief Description of Drawings

[Fig. 1] Fig. 1 is an enlarged schematic diagram showing a relevant portion of a porous substrate used in the present invention.
[Fig. 2] Fig. 2 is a scanning electron microscope image of the porous substrate used in the present invention.

### Description of Embodiments

Hereinafter, the present invention will be described by way of preferred embodiments thereof. The present invention relates to a porous substrate supporting an amino compound. In the present invention, the amino compound is supported in at least some pores of the porous substrate. An amino compound-supported porous substrate is conventionally known. A feature of the amino compound-supported porous substrate according to the present invention is its capability of supporting various types of amino compounds. Another feature of the amino compound-supported porous substrate according to the present invention is a higher proportion of the amino compound that contributes to acid gas adsorption than that of a conventional porous substrate that supports the same amino compound. In light of this, it is advantageous that a porous substrate (or in other words, a porous substrate before an amino compound is supported) used in the present invention has pores as described below.

The porous substrate used in the present invention has a total pore volume per unit volume, Vt, of preferably 0.55 mL/mL or more and 0.95 mL/mL or less, as determined by mercury porosimetry. Due to such a pore volume, the porous substrate used in the present invention can support various types of amino compounds, and also has a high compression strength when used as a molded article. In addition, when an amino compound is supported on the porous substrate used in the present invention, such a pore volume can increase the amount of the amino group that contributes to gas adsorption, as compared with that of a conventional porous substrate. In view of making these advantageous effects even more remarkable, the porous substrate used in the present invention more preferably has a total pore volume per unit volume, Vt, of 0.55 mL/mL or more and 0.90 mL/mL or less, even more preferably 0.60 mL/mL or more and 0.85 mL/mL or less, and yet even more preferably 0.70 mL/mL or more and 0.85 mL/mL or less, as determined by mercury porosimetry.

On the other hand, the total pore volume of the amino compound-supported porous substrate according to the present invention, in which an amino compound is supported on the porous substrate, varies depending on the type of amino compound supported and the amount of the amino compound supported. However, the amino compound-supported porous substrate preferably has a total pore volume per unit volume of the amino compound-supported porous substrate, Va, of 0.05 mL/mL or more and 0.80 mL/mL or less, as determined by mercury porosimetry. When the amino compound-supported porous substrate has a pore volume within the range described above, the amino compound-supported porous substrate can deliver both adsorption performance and diffusibility of gas that flows through the amino compound-supported porous substrate. In view of making this advantageous effect even more remarkable, the amino compound-supported porous substrate in the present invention more preferably has a total pore volume per unit volume of the amino compound-supported porous substrate, Va, of 0.10 mL/mL or more and 0.75 mL/mL or less, and even more preferably 0.50 mL/mL or more and 0.70 mL/mL or less, as determined by mercury porosimetry.

It is advantageous that the porous substrate used in the present invention (or in other words, a porous substrate before an amino compound is supported) should have at least macropores. This enables any of various types of amino compounds to be used for the amino compound-supported porous substrate according to the present invention and this also achieves a high proportion of the amino compound that contributes to acid gas adsorption.

The term "macropores" of a porous substrate refers to, in general, pores of the porous substrate that have a pore size of 50 nm or more. The porous substrate used in the present invention has a controlled pore size distribution of macropores of the porous substrate. More specifically, the mode of pore size distribution of macropores, Dm, of the porous substrate used in the present invention is preferably 0.05 µm or more and 3.0 µm or less, as determined in a pore size range of 50 nm or more and 500 µm or less by mercury porosimetry. Due to such pore size distribution of macropores described above, the porous substrate used in the present invention can support various types of amino compounds. Also, when an amino compound is supported on the porous substrate used in the present invention, such pore size distribution of macropores can increase the amount of the amino group that contributes to gas adsorption, as compared with that of a conventional porous substrate. In view of making this advantageous effect even more remarkable, the porous substrate used in the present invention more preferably has a mode of pore size distribution of macropores, Dm, of 0.07 µm or more and 2.0 µm or less, and even more preferably 0.10 µm or more and 1.5 µm or less, as determined in a pore size range of 50 nm or more and 500 µm or less by mercury porosimetry.

The porous substrate used in the present invention preferably has a controlled pore volume of macropores. More specifically, the porous substrate used in the present invention preferably has a pore volume of macropores per unit volume of the porous substrate, Vm, of 0.20 mL/mL or more and 0.70 mL/mL or less, as determined in a pore size range of 50 nm or more and 500 µm or less by mercury porosimetry. Due to such a pore volume of macropores, the porous substrate used in the present invention can support various types of amino compounds, and also has a high compression strength when used as a molded article. In addition, when an amino compound is supported on the porous substrate used in the present invention, such a pore volume of macropores can increase the amount of the amino group that contributes to gas adsorption, as compared with that of a conventional porous substrate. In view of making this advantageous effect even more remarkable, the porous substrate used in the present invention more preferably has a pore volume of macropores per unit volume of the porous substrate, Vm, of 0.30 mL/mL or more and 0.65 mL/mL or less, and even more preferably 0.40 mL/mL or more and 0.60 mL/mL or less, as determined in a pore size range of 50 nm or more and 500 µm or less by mercury porosimetry.

On the other hand, the amino compound-supported porous substrate according to the present invention, in which an amino compound is supported on the porous substrate, preferably has a pore volume of macropores per unit volume of the amino compound-supported porous substrate, Vma, of 0.01 mL/mL or more and 0.65 mL/mL or less, more preferably 0.01 mL/mL or more and 0.60 mL/mL or less, and even more preferably 0.01 mL/mL or more and 0.57 mL/mL or less. When the amino compound-supported porous substrate has a pore volume of macropores, Vma, within the range described above, the amino compound-supported porous substrate can deliver both adsorption performance and diffusibility of gas that flows through the amino compound-supported porous substrate.

The porous substrate used in the present invention preferably includes mesopores in addition to macropores described above. The term "mesopores" refers to, in general, pores of the porous substrate that have a pore size of greater than 2 nm and less than 50 nm. The porous substrate used in the present invention having macropores and mesopores brings about the advantageous effects of improving gas adsorption performance and improving the efficiency in supporting the amino compound. In view of making this advantageous effect even more remarkable, the mode of pore size distribution of mesopores, Ds, of the porous substrate used in the present invention is preferably greater than 2.0 nm and less than 50 nm, more preferably 5.0 nm or more and 30 nm or less, and even more preferably 7.0 nm or more and 20 nm or less, as determined in a pore size range of greater than 2.0 nm and less than 50 nm by mercury porosimetry.

The porous substrate used in the present invention preferably has a controlled pore volume of mesopores. More specifically, the porous substrate used in the present invention preferably has a pore volume of mesopores per unit volume of the porous substrate, Vs, of 0.05 mL/mL or more and 0.50 mL/mL or less, as determined in a pore size range of greater than 2.0 nm and less than 50 nm by mercury porosimetry. Due to such a pore volume of mesopores, the porous substrate used in the present invention can support various types of amino compounds, and also has a high compression strength when used as a molded article. In addition, when an amino compound is supported on the porous substrate used in the present invention, such a pore volume of mesopores can increase the amount of the amino group that contributes to gas adsorption, as compared with that of a conventional porous substrate. In view of making this advantageous effect even more remarkable, the porous substrate used in the present invention more preferably has a pore volume of mesopores, Vs, of 0.10 mL/mL or more and 0.40 mL/mL or less, and even more preferably 0.15 mL/mL or more and 0.35 mL/mL or less, as determined in a pore size range of greater than 2.0 nm and less than 50 nm by mercury porosimetry.

On the other hand, the amino compound-supported porous substrate according to the present invention, in which an amino compound is supported on the porous substrate, preferably has a pore volume of mesopores per unit volume of the amino compound-supported porous substrate, Vsa, of 0.01 mL/mL or more and 0.30 mL/mL or less, more preferably 0.01 mL/mL or more and 0.25 mL/mL or less, and even more preferably 0.01 mL/mL or more and 0.20 mL/mL or less. When the amino compound-supported porous substrate has a pore volume of mesopores, Vsa, within the range described above, the amino compound-supported porous substrate can deliver both adsorption performance and diffusibility of gas that flows through the amino compound-supported porous substrate.

The pore volume per unit volume of each of the porous substrate and the amino compound-supported porous substrate described above can be calculated using the pore volume per unit mass and the bulk density obtained using ordinary methods. The bulk density can be obtained by, for example, mercury porosimetry.

Likewise, the amount of the amino group per unit volume of the amino compound-supported porous substrate according to the present invention, which will be described later, can be calculated using the amount of the amino group per unit mass and the bulk density obtained using ordinary methods.

In the case where the porous substrate used in the present invention includes macropores and mesopores, the ratio of the mode of pore size distribution of macropores, Dm, to the mode of pore size distribution of mesopores, Ds, (i.e., the ratio Dm/Ds) is preferably 5 or more and 200 or less, in view of obtaining the advantageous effect of improving gas adsorption performance. In view of making this advantageous effect even more remarkable, the ratio Dm/Ds is more preferably 5 or more and 150 or less, even more preferably 30 or more and 150 or less, yet even more preferably 30 or more and 130 or less, yet even more preferably 40 or more and 130 or less, yet even more preferably 40 or more and 120 or less, and yet even more preferably 50 or more and 120 or less.

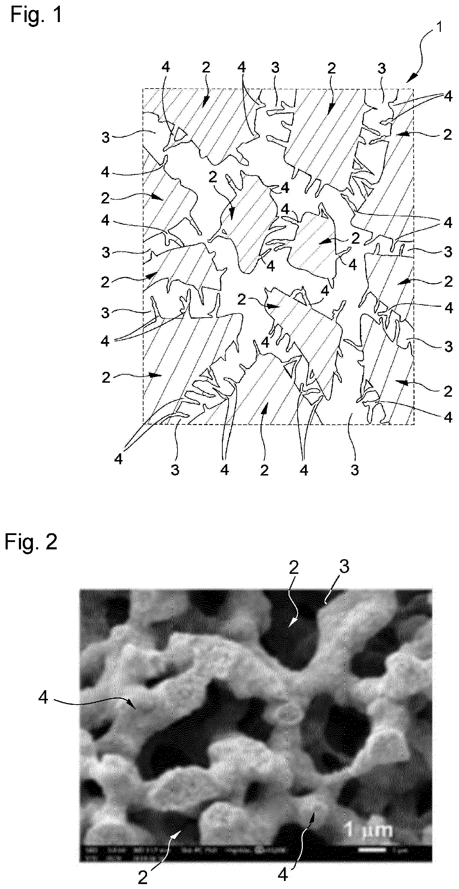

In the case where the porous substrate used in the present invention includes macropores and mesopores, a porous substrate 1 preferably has a co-continuous structure composed of: a skeleton 3 including mesopores 4 formed therein; and macropores 2, as shown in Fig. 1. In porous substrate 1 shown in Fig. 1, skeleton 3 and macropores 2 each has a continuous three-dimensional mesh structure while skeleton 3 and macropores 2 are entangled with each other, thereby forming the co-continuous structure composed of skeleton 3 and macropores 2. The fact that porous substrate 1 has the co-continuous structure composed of skeleton 3 and macropores 2 can be confirmed by observing a surface or a cross section of porous substrate 1 using a scanning electron microscope (hereinafter also referred to as "SEM").

Skeleton 3 shown in Fig. 1 is a portion that is made of the material forming porous substrate 1. The material forming porous substrate 1 may be, for example, an oxide ceramic that contains a metalloid element or a metal element.

The metalloid element may be, for example, silicon. An example of an oxide ceramic that contains silicon may be silica (SiO₂).

The metal element may be, for example, a transition metal element such as aluminum, tin, cerium, titanium, zirconium, vanadium, chromium, iron, cobalt, nickel, palladium, platinum, copper, silver, gold, or zinc. Out of these, it is preferable to use aluminum, tin, cerium, titanium, or zirconium, in view of ease in production of porous substrate 1. Examples of an oxide ceramic that contains aluminum, tin, cerium, titanium, or zirconium include alumina (Al₂O₃), tin oxide (SnO₂), ceria (CeO₂), titania (TiO₂), and zirconia (ZrO₂).

In the case where the oxide ceramic contains silicon or a transition metal element, the oxide ceramic may further contain, in addition to silicon or the transition metal element, an element selected from alkali metal elements such as lithium and sodium, alkaline earth metal elements such as magnesium and calcium, and rare earth elements such as lanthanum, scandium, yttrium, and gadolinium.

There is no particular limitation on the shape of the porous substrate used in the present invention. The porous substrate may have, for example, a spherical shape, a polyhedral shape, a columnar shape, a flat shape, or any combination thereof. In the case where the amino compound-supported porous substrate according to the present invention is used as, for example, a gas adsorbing material, which will be described later, the porous substrate is preferably a molded article in view of reducing pressure loss. In the case where the porous substrate is a molded article, appropriate gaps are formed between pellets or the like of the porous substrate, whereby gas adsorption can be performed efficiently without causing an excessive pressure loss. There is no particular limitation on the shape of the molded article. The molded article may have, for example, a columnar shape, which will be described later, a spherical shape, a polyhedral shape, a flat shape, or any combination thereof.

In the case where the porous substrate is a columnar molded article, the porous substrate may be, for example, a columnar body with a convex-curved lateral face, such as a circular cylinder or an elliptic cylinder. Alternatively, the porous substrate may be a polygonal prism such as a quadrangular prism, a hexagonal prism, or an octagonal prism, or in other words, a columnar body having a plurality of planes as lateral faces. In the case where the porous substrate is a columnar body, the columnar body may include a lacked portion. For example, the cross section of the columnar body may be a circular shape, an elliptic shape, or a polygonal shape, with a part thereof missed.

Geometrically, the term "columnar body" usually refers to a columnar body that has planar faces (or in other words, planar bases) at the upper and lower end in the height direction of the columnar body. However, in the present invention, the bases do not necessarily need to be planar in a strict sense, and may have a curved portion (a convex curve portion and/or a concave curve portion) as long as the whole can be regarded as a columnar body.

In the case where the porous substrate is a columnar molded article, the average diameter of the columnar molded article, or in other words, the average diameter of a cross section of the columnar body when the columnar body is cut in a direction perpendicular to the height direction of the columnar body is preferably 1.5 mm or more, more preferably 2.5 mm or more, even more preferably 3.0 mm or more, yet even more preferably 3.5 mm or more, and yet even more preferably 4.0 mm or more. On the other hand, the average diameter of the columnar body is preferably 20 mm or less, more preferably 14 mm or less, even more preferably 12 mm or less, yet even more preferably 10 mm or less, and yet even more preferably 8 mm or less. When the average diameter of the columnar body is within the above-described range, the columnar body has improved durability and can also support a larger amount of the amino compound.

When the columnar body is cut in a direction perpendicular to the height direction of the columnar body, the cross section of the columnar body may not be circular, and in such a case, the term "average diameter" as used above means a circle equivalent diameter in the area of the cross section.

In the case where the porous substrate is a columnar body, the columnar body preferably has an aspect ratio of 0.70 or more, more preferably 1.0 or more, and even more preferably 1.5 or more, in view of improving durability. Also, in view of ease in operation when the porous substrate is housed in a column before use, the aspect ratio of the columnar body is preferably 10 or less, more preferably 7.0 or less, even more preferably 5.0 or less, and yet even more preferably 4.0 or less. The term "the aspect ratio of a columnar body" refers to a value obtained by dividing the height of a columnar body 1 by the average diameter of the base of the columnar body.

In the case where the amino compound-supported porous substrate in the present invention is a molded article, the amino compound-supported porous substrate preferably has a compression strength of 5 N or more in view of durability, irrespective of the shape thereof. From this viewpoint, the compression strength of the porous substrate is more preferably 7 N or more, and even more preferably 10 N or more. In view of durability, a higher compressive strength of the porous substrate is more desirable. There is no particular limitation on the upper limit of the compressive strength, but the compressive strength is usually 60 N or less. When the compression strength is as high as about 10N, the porous substrate has a satisfactory durability. The method for measuring the compression strength will be described in the Example section given below.

The porous substrate used in the present invention is preferably produced using a method including the following steps (a) to (c):
(a) producing a polymetalloxane gel using a sol-gel method;
(b) forming pores in the skeleton of the polymetalloxane gel produced in the step (a); and
(c) optionally washing and/or drying the polymetalloxane gel that has been subjected to the step (b), and then calcining the polymetalloxane gel to produce a porous substrate.

Hereinafter, the steps will be described one by one.

### Step (a)

In the step (a), a polymetalloxane gel is produced using a sol-gel method.

Polymetalloxane is an inorganic polymer having a metalloxane bond as its main chain skeleton. The metalloxane bond is a bond between a metalloid element or a metal element and an oxygen atom, or in other words, an M-O bond, where M represents a metalloid element or a metal element.

The metalloid element represented by M may be, for example, silicon. The metal element represented by M may be, for example, a transition metal element such as aluminum, tin, cerium, titanium, zirconium, vanadium, chromium, iron, cobalt, nickel, palladium, platinum, copper, silver, gold, or zinc. In view of ease in production of the porous substrate, the metal element represented by M is preferably at least one selected from the group consisting of aluminum, tin, cerium, titanium, and zirconium.

The sol-gel method can be performed in accordance with an ordinary method. An example of the sol-gel method will be described below.

The sol-gel method includes the sol producing step and the gel producing step.

In the sol producing step, a reaction solution that contains a ceramic precursor, a catalyst, and a macropore forming agent is mixed to produce a sol.

There is no particular limitation on the type of ceramic precursor as long as it is possible to form a polymetalloxane gel. The ceramic precursor may be, for example, a metalloid compound (for example, a silicon compound) having a hydroxy group and/or a hydrolyzable functional group, or a metal compound (for example, an aluminum compound, a tin compound, a cerium compound, a titanium compound, or a zirconium compound) having a hydroxy group and/or a hydrolyzable functional group. The total number of hydroxy groups and hydrolyzable functional groups contained in the ceramic precursor may be one or two. However, in view of producing a polymetalloxane gel that has a highly cross-linked structure by a metalloxane bond (M-O bond), the total number of hydroxy groups and hydrolyzable functional groups contained in the ceramic precursor is preferably three or more, and more preferably four. In the case where the ceramic precursor contains two or more hydrolyzable functional groups, the two or more hydrolyzable functional groups may be of the same type or different types.

The hydrolyzable functional group is a functional group that is converted to a hydroxy group through hydrolysis. Examples of the hydrolyzable functional group include an alkoxy group, an acetoxy group, a halide group, and a hydride group. The hydrolyzable functional group is preferably an alkoxy group. The alkoxy group is preferably an alkoxy group having 1 to 10 carbon atoms, more preferably an alkoxy group having 1 to 5 carbon atoms, and even more preferably a methoxy group, an ethoxy group, or a propyl group. The alkoxy group may be linear or branched.

The silicon compound having a hydroxy group and/or a hydrolyzable functional group is preferably an alkoxysilane. Examples of the alkoxysilane include a tetra-alkoxysilane, a tri-alkoxysilane, a di-alkoxysilane, and a mono-alkoxysilane. Out of these, a tetra-alkoxysilane is preferable in view of facilitating the hydrolysis reaction and the polycondensation reaction. Examples of the tetra-alkoxysilane include tetramethoxysilane, and tetraethoxysilane.

The aluminum compound having a hydroxy group and/or a hydrolyzable functional group is preferably aluminum hydroxide or aluminum alkoxide.

The tin compound having a hydroxy group and/or a hydrolyzable functional group is preferably tin hydroxide or tin alkoxide.

The cerium compound having a hydroxy group and/or a hydrolyzable functional group is preferably cerium hydroxide or cerium alkoxide.

The titanium compound having a hydroxy group and/or a hydrolyzable functional group is preferably titanium alkoxide. Examples of the titanium alkoxide include titanium monoalkoxide, titanium dialkoxide, titanium trialkoxide, and titanium tetraalkoxide. Out of these, titanium tetraalkoxide is preferable in view of facilitating the hydrolysis reaction and the polycondensation reaction. Examples of the titanium tetraalkoxide include titanium tetraisopropoxide.

The zirconium compound having a hydroxy group and/or a hydrolyzable functional group is preferably zirconium alkoxide. Examples of the zirconium alkoxide include zirconium monoalkoxide, zirconium dialkoxide, zirconium trialkoxide, and zirconium tetraalkoxide. Out of these, zirconium tetraalkoxide is preferable in view of facilitating the hydrolysis reaction and the polycondensation reaction. Examples of the zirconium tetraalkoxide include zirconiumtetraisopropoxide.

The ceramic precursor may be a metal salt (for example, an aluminum salt, a tin salt, or a cerium salt) that can be converted to a hydroxide through hydrolysis. Examples of the aluminum salt include aluminum nitrate, aluminum sulfate, and aluminum chloride. Examples of the tin salt include tin nitrate, tin sulfate, and tin chloride. Examples of the cerium salt include cerium nitrate, cerium sulfate, and cerium chloride. Out of these, it is preferable to use aluminum chloride, tin chloride or cerium chloride in view of facilitating the hydrolysis reaction and the polycondensation reaction.

The catalyst functions as a catalyst for hydrolysis reaction. The catalyst may be, for example, an acid or a base.

Examples of the acid include: inorganic acids such as hydrochloric acid, sulfuric acid, and nitric acid; and organic acids such as formic acid, acetic acid, oxalic acid, and citric acid.

Examples of the base include: sodium hydroxide, potassium hydroxide, ammonia water, sodium carbonate, sodium hydrogen carbonate; amines such as trimethyl ammonium; ammonium hydroxides such as tert-butyl ammonium hydroxide; and alkali metal alkoxides such as sodium methoxide.

The macropore forming agent contributes to formation of macropores in the porous substrate. The macropore forming agent may be, for example, a water-soluble polymer or a surfactant. Out of these, a water-soluble polymer is preferable.

The water-soluble polymer induces a sol-gel transition accompanying a phase separation process (typically, spinodal decomposition) and contributes to formation of a co-continuous structure composed of a skeleton phase and a solvent phase in the gel, and eventually formation of macropores in the porous substrate.

Examples of the water-soluble polymer include polyalkylene glycols such as polyethylene glycol and polypropylene glycol, polyacrylic acid, a polyethylene glycol-polypropylene glycol block copolymer, polyvinyl pyrrolidone, poly(sodium styrenesulfonate), and poly(allylamine hydrochloride).

The water-soluble polymer preferably has a weight average molecular weight of 8000 or more and 15000 or less in view of efficiently performing a phase separation process (typically, spinodal decomposition). The weight average molecular weight is determined by gel permeation chromatography (GPC).

Examples of the surfactant include: cationic surfactants such as cetyl trimethylammonium chloride; anionic surfactants such as sodium dodecyl sulfate; and non-ionic surfactants such as polyoxyethylene alkyl ether.

In the case where the ceramic precursor is a metalloid compound, the reaction solution may also contain a mesopore forming agent. The mesopore forming agent contributes to formation of mesopores in the porous substrate. The mesopore forming agent may be, for example, a nitrogen compound. Examples of the nitrogen compound that can be used as the mesopore forming agent include: amide compounds such as urea, formamide, N-methylformamide, N,N-dimethylformamide, acetamide, N-methylacetamide, and N,N-dimethylacetamide; and heterocyclic compounds such as hexamethylenetetramine. Out of these, urea is preferable in view of efficiently forming mesopores.

The reaction solution may contain one or more solvents. Examples of the solvent include water, an organic solvent, and a mixed solvent of water and an organic solvent.

Examples of the organic solvent include: alcohols such as methanol, ethanol, propanol, and butanol; and ketones such as acetone and methyl ethyl ketone.

In the case where the solvent is a mixed solvent of water and an organic solvent, the content of the organic solvent is preferably 65 mass% or less based on the mixed solvent.

In view of appropriately controlling the timing of the start of the reaction, the reaction solution is preferably prepared by adding a ceramic precursor to a mixed solution containing a catalyst, a macropore forming agent, and optionally a mesopore forming agent. The reaction starts upon adding the ceramic precursor to the mixed solution containing a catalyst, a macropore forming agent, and optionally a mesopore forming agent.

The reaction solution may be cooled when the reaction solution is stirred. The reaction solution may be cooled such that, for example, the reaction solution has a temperature at which a sol-gel transition accompanying a phase separation process

(typically, spinodal decomposition) easily proceeds, and preferably has a temperature of 60°C or less. The lower limit of the temperature is a temperature at which the reaction solution does not freeze, and may be, for example, about 1°C.

For example, in the case where tetramethoxysilane, which is a metalloid compound having a hydrolyzable functional group, is used as the ceramic precursor, it is preferable to perform the above-described cooling process.

The reaction solution is transformed into a sol along with the progress of the hydrolysis reaction and the polycondensation reaction.

In the hydrolysis reaction, the hydrolyzable functional group of the ceramic precursor is hydrolyzed to form a hydroxy group. In the polycondensation reaction, due to a dehydration condensation reaction between hydroxy groups and a dealcoholization condensation reaction between a hydroxy group and a hydrolyzable functional group unhydrolyzed yet, a metalloxane oligomer is formed. For example, in the case where the ceramic precursor is a silicon compound having a hydrolyzable functional group, a siloxane oligomer is formed through a dehydration condensation reaction represented by the following formula (1) and a dealcoholization condensation reaction represented by the following formula (2). In the following formula (2), -OR represents a hydrolyzable functional group unhydrolyzed yet.

=Si-OH + HO-Si= - =Si-O-Si= + H₂O (1)

=Si-OR + HO-Si= - =Si-O-Si= + ROH (2)

When the hydrolysis reaction and the polycondensation reaction further proceed, nano meter-sized metalloxane oligomer primary particles are formed, and secondary particles are formed by aggregation of the primary particles. The reaction solution is thus transformed into a sol.

In the gel producing step, the sol obtained in the sol producing step is heated to a gelling temperature to produce a polymetalloxane gel. A mold is optionally placed in the sol before the heating. In the gel producing step, the hydrolysis reaction and the polycondensation reaction further proceed to form a metalloxane polymer, and induce a sol-gel transition accompanying a phase separation process (typically, spinodal decomposition), whereby a polymetalloxane gel (wet gel) is produced. The resulting polymetalloxane gel has a co-continuous structure composed of a skeleton phase and a solvent phase. The skeleton phase is rich in the metalloxane polymer generated through the hydrolysis reaction and the polycondensation reaction, and the solvent phase is rich in the solvent. Each of the skeleton phase and the solvent phase has a continuous three-dimensional mesh structure while the skeleton phase and the solvent phase are entangled with each other, to thereby form the co-continuous structure composed of the skeleton phase and the solvent phase.

The mold is a frame for molding the gel into a desired shape. Examples of the material of the mold include: synthetic resins such as polystyrene, polyethylene, polypropylene, polyethylene terephthalate (PET), polycarbonate (PC), silicone, and polytetrafluoroethylene (PTFE); and metals such as aluminum and stainless steel.

In view of appropriately forming the co-continuous structure composed of the skeleton phase and the solvent phase in the gel, the gelling temperature is preferably 20°C or more and 80°C or less, and more preferably 25°C or more and 40°C or less. The heating time for gelling is preferably 4 hours or more and 24 hours or less.

### Step (b)

In the step (b), pores are formed in the skeleton of the polymetalloxane gel produced in the step (a).

Pores can be formed in the skeleton of the polymetalloxane gel using an ordinary method. When forming pores in the skeleton of the polymetalloxane gel, the polymetalloxane gel produced in the step (a) may be reacted with a mesopore forming agent as needed.

Details of the mesopore forming agent are the same as those described above. The mesopore forming agent may be contained in either one or both of the polymetalloxane gel formed in the step (a) and a reaction solution containing the polymetalloxane gel and a mesopore forming agent. In the step (b), pores (pores that function as mesopores in the porous substrate) are formed in the skeleton of the gel. The reaction solution may contain one or more solvents. Details of the solvent are the same as those described above.

The reaction between the polymetalloxane gel and the mesopore forming agent may be carried out while heating under reflux.

The heating temperature under reflux is preferably 50°C or more and 120°C or less. The heating temperature under reflux is preferably 1 hour or more and 36 hours or less, and more preferably 4 hours or more and 24 hours or less.

In the case where a metalloid compound having a hydrolyzable functional group is used as the ceramic precursor, it is preferable that the polymetalloxane gel and the mesopore forming agent should be reacted by heating under reflux.

### Step (c)

In the step (c), the polymetalloxane gel that has been subjected to the step (b) is optionally washed and/or dried, and then the polymetalloxane gel is calcined to produce a porous substrate.

A liquid for washing may be used for washing, and examples thereof include water, an organic solvent, a mixed solvent of water and an organic solvent, and an aqueous solution containing an acid or a base.

Examples of the organic solvent include alcohols such as methyl alcohol, ethyl alcohol, N-propanol, 2-propanol (IPA), and butanol.

Examples of the acid include hydrochloric acid, sulfuric acid, nitric acid, hydrofluoric acid, acetic acid, formic acid, carbonic acid, citric acid, and phosphoric acid.

Examples of the base include sodium hydroxide, potassium hydroxide, ammonia, a water-soluble amine, sodium carbonate, and sodium hydrogen carbonate.

The drying may be, for example, natural drying, heat drying, drying involving use of a low-surface tension solvent, drying by freeze sublimation, or supercritical drying.

The calcination temperature in the calcination process is preferably 500°C or more and 1000°C or less, and more preferably 600°C or more and 800°C or less. The calcination time is preferably 1 hour or more and 8 hours or less, and more preferably 3 hours or more and 5 hours or less. The calcination process is usually performed under an air atmosphere.

The porous substrate thus obtained has a co-continuous structure composed of: a ceramic skeleton having mesopores formed therein; and macropores. The ceramic skeleton of the porous substrate is derived from the skeleton phase of the polymetalloxane gel, and the macropores of the porous substrate are derived from the solvent phase of the polymetalloxane gel.

The produced porous substrate may be molded into, for example, a columnar body before use. Alternatively, a mold or the like may be used to produce a molded porous substrate, and the resulting molded porous substrate may be used as is, or may be optionally further molded into, for example, a columnar body before use. Specifically, a mold for molding the gel into a desired shape can be used in the gel producing step to produce a molded porous substrate.

As an amino compound to be supported on the porous substrate obtained in the above-described manner, any type of amino compound can be used without any particular limitation, including those having a primary amino group (-NH₂), a secondary amino group (-NHR¹), a tertiary amino group (-NR¹R²), or a quaternary amino group (-N⁺R¹R²R³) in the chemical structure. Here, R¹, R², and R³ each independently represent, for example, a substituted or unsubstituted alkyl group, or a substituted or unsubstituted aryl group. The alkyl group may be, for example, an alkyl group having 1 to 10 carbon atoms. The alkyl group may be linear or branched. The aryl group may be, for example, a monocyclic, bicyclic, or tricyclic aromatic hydrocarbon group having 6 to 14 carbon atoms. Examples of the aryl group include a phenyl group, and a naphthyl group. Examples of a substituent that can be used in the alkyl group or the aryl group include a hydroxyl group, and a halogen atom. The halogen atom is selected from a fluorine atom, a chlorine atom, a bromine atom, and an iodine atom. The amino compound may be, for example, a monoamine-type amino compound, which has a single amino group per molecule, or a polyamine-type amino compound, which has two or more amino groups per molecule.

The amino compound may be, for example, a low-molecular weight compound or a polymer compound.

The low-molecular weight compound may be, for example, an aliphatic amine or an aromatic amine.

The aliphatic amine may be a linear aliphatic amine or a cyclic aliphatic amine. Examples thereof include ethylenediamine, diethylenetriamine, triethylenetetramine, tetraethylenepentamine, pentaethylenehexamine, bis(2-hydroxypropyl)amine, N,N'-bis(2-hydroxyethyl)ethylenediamine, monoethanolamine, diethanolamine, diisopropanolamine, methylamine, dimethylamine, diethylamine, methyldiethanolamine, methylethanolamine, piperidine, piperazine, and 2-aminoethylpiperazine.

Examples of the aromatic amine include 2-picolylamine, aniline, and m-xylenediamine.

Examples of the polymer compound include a linear polyethyleneimine, and a branched polyethyleneimine.

These amino compounds may be used singly or in combination of two or more.

Out of these amino compounds, it is preferable to use a polyamine, a primary amine, a secondary amine, a tertiary amine, a quaternary ammonium, an aromatic amine, or a polyimine, in view of ease in supporting on the porous substrate and high acid gas adsorption performance in a case where the amino compound-supported porous substrate according to the present invention is used as an acid gas adsorbent material, for example.

The amino compound used in the present invention may be used together with an antioxidant in view of increasing the flowability of the amino compound to easily support the amino compound in the pores. Examples of the antioxidant used include ascorbic acid, hydroquinone, 3,5-dibutyl-4-hydroxytoluene, butylhydroxyanisole, α-tocopherol, and polyethylene glycol. These additives may be used singly or in a combination of two or more.

In the amino compound-supported porous substrate according to the present invention, the term "support" encompasses a state in which an amino compound are chemically bonded to a carrier (hereinafter also referred to as "chemical bond modification") and a state in which an amino compound are physically adsorbed to a carrier (hereinafter also referred to as "non-chemical bond modification"), and the amino compound-supported porous substrate may include the amino compound in either one or both of these states.

There is no particular limitation on the method for modifying the porous substrate used in the present invention with the amino compound. For example, a method may be used in which a functional group (for example, a hydroxyl group) on the surface of the porous substrate is reacted with a silane coupling agent having a nitrogen element-containing functional group (for example, a primary amino group, a secondary amino group, a tertiary amino group, or a quaternary ammonium group) to chemically fix the silane coupling agent having a nitrogen element-containing functional group to the surface of the porous substrate.

There is no particular limitation on the method for modifying the porous substrate used in the present invention with the amino compound by non-chemical bond modification, either. For example, the following method may be used. An amino compound is mixed with a solvent compatible with the amino compound to prepare a solution, and the solution is mixed with the porous substrate to cause the solution to permeate into the pores of the porous substrate. Next, the solvent of the solution including the porous substrate is evaporated under a reduced pressure, and the resulting porous substrate is heat dried to cause the amino compound to remain in the pores of the porous substrate.

Another non-chemical bond modification method may be as follows. An amino compound and the porous substrate are placed in an autoclave such that they are spaced apart from each other. Then, the autoclave is evacuated to fill the autoclave with a vapor of the amino compound to thereby introduce the amino compound into the pores of the porous substrate.

The amino compound-supported porous substrate of the present invention, in which the amino compound is supported on the porous substrate obtained in the above-described manner, has a large amount of the amino group that contributes to gas adsorption due to the macropores of the porous substrate. The amount of the amino compound that contributes to gas adsorption (hereinafter also referred to as "amine efficiency") can be calculated by dividing the amount of CO₂ adsorbed per unit mass of the amino compound-supported porous substrate by the amount of the amino compound supported per unit mass of the amino compound-supported porous substrate. Specific methods for determining the amount of CO₂ adsorbed and the amount of the amino compound supported will be described in the Example section given later.

The amount of the amino group per unit volume of the amino compound-supported porous substrate according to the present invention is preferably 1.0 mmol/mL or more and 30.0 mmol/mL or less, more preferably 2.0 mmol/mL or more and 25.0 mmol/mL or less, and even more preferably 3.0 mmol/mL or more and 20.0 mmol/mL or less.

The amino compound-supported porous substrate according to the present invention is used to adsorb various types of gases according to the properties of the amino compound in the amino compound-supported porous substrate. In particular, an adsorbent material including the amino compound-supported porous substrate according to the present invention can be used as an acid gas adsorbent material for adsorbing, for example, carbon dioxide, a nitrogen oxide, and a sulfur oxide through chemisorption of the amino group.

Notably, due to the macropores of the porous substrate, the amino compound-supported porous substrate according to the present invention advantageously has a high proportion of the amount of the amino group that contributes to gas adsorption performance in the total amount of the amino compound supported. Accordingly, a gas to be treated and a pressure condition when the amino compound-supported porous substrate is used can be advantageously selected from wide ranges of gases and pressure conditions.

Particularly in the case where the amino compound-supported porous substrate according to the present invention is a molded article, the pressure loss when a gas is allowed to flow is advantageously suppressed greatly, due to the synergistic effect of the shape of the porous substrate and the macropores of the porous substrate, and it is therefore possible to treat a large amount of gas that contains a target gas to be adsorbed at a low concentration. For example, the gas to be treated may be air; in this case, carbon dioxide contained in the air can be treated at a high speed and a large amount of carbon dioxide can be treated. This is very advantageous in view of preventing global warming by removing carbon dioxide from the air and also complying emission control regulations by removing carbon dioxide from the gas emitted from plants.

The acid gas adsorbed to the amino compound-supported porous substrate according to the present invention, such as carbon dioxide, a nitrogen oxide, and a sulfur oxide, can be desorbed by heating the amino compound-supported porous substrate. For example, the desorbed carbon dioxide can be used as a starting material for synthesizing various types of organic compounds, specifically, for example, a starting material for synthesizing methane, propylene, gasoline, or the like. The amino compound-supported porous substrate that has adsorbed carbon dioxide may also be stored for long term in storage facilities. Also, the desorbed nitrogen oxide can be used as, for example, a starting material for synthesizing nitric acid. The desorbed sulfur oxide can be used as, for example, a starting material for synthesizing hydrogen sulfide or sulfuric acid.

The present invention has been described above by way of preferred embodiments thereof. However, the present invention is not limited to the embodiments given above.

Regarding the embodiment described above, the present invention further discloses an amino compound-supported porous substrate and an acid gas adsorbent material described below.
[1] An amino compound-supported porous substrate comprising:
   a porous substrate including at least macropores; and
   an amino compound supported in at least some pores of the porous substrate,
   wherein the porous substrate has a total pore volume per unit volume of the porous substrate of 0.55 mL/mL or more and 0.95 mL/mL or less, as determined by mercury porosimetry.
[2] The amino compound-supported porous substrate as set forth in clause [1],
   wherein the porous substrate has a mode of pore size distribution of the macropores of 0.05 µm or more and 3.0 µm or less, as determined in a pore size range of 50 nm or more and 500 µm or less by mercury porosimetry.
[3] The amino compound-supported porous substrate as set forth in clause [1] or [2],
   wherein the porous substrate as a skeleton containing an element selected from the group consisting of silicon, aluminum, tin, cerium, titanium, and zirconium.
[4] The amino compound-supported porous substrate as set forth in any one of items [1] to [3],
   wherein the amino compound-supported porous substrate includes an amino group in an amount, per unit volume of the amino compound-supported porous substrate, of 1.0 mmol/mL or more and 30.0 mmol/mL or less.
[5] The amino compound-supported porous substrate as set forth in any one of items [1] to [4],
   wherein the amino compound is at least one selected from the group consisting of a polyamine, a primary amine, a secondary amine, a tertiary amine, a quaternary ammonium, an aromatic amine, and a polyimine.
[6] The amino compound-supported porous substrate as set forth in any one of items [1] to [5],
   wherein the amino compound-supported porous substrate has a total pore volume, per unit volume of the amino compound-supported porous substrate, of 0.05 mL/mL or more and 0.80 mL/mL or less, as determined by mercury porosimetry.
[7] The amino compound-supported porous substrate as set forth in any one of items [1] to [6],
   wherein the porous substrate further includes mesopores, and
   the porous substrate has a co-continuous structure composed of: a skeleton including the mesopores formed therein; and the macropores.
[8] The amino compound-supported porous substrate as set forth in clause [7],
   wherein the porous substrate has a ratio of a mode of pore size distribution of the macropores to a mode of pore size distribution of the mesopores of 5 or more and 200 or less.
[9] The amino compound-supported porous substrate as set forth in any one of items [1] to [8],
   wherein the porous substrate is a molded article.
[10] The amino compound-supported porous substrate as set forth in clause [9],
   wherein the molded article is a columnar body and has an average diameter of 1.5 mm or more and 20 mm or less.
[11] The amino compound-supported porous substrate as set forth in clause [9] or [10],
   wherein the amino compound-supported porous substrate has a compression strength of 5 N or more.
[12] An acid gas adsorbent material including the amino compound-supported porous substrate as set forth in any one of clauses [1] to [11].

### Examples

Hereinafter, the present invention will be described in further detail by way of examples. However, the scope of the present invention is not limited to the examples given below. Unless otherwise stated, the percent sign "%" used herein means "mass%".

### Example 1

### (1) Production of Porous Substrate

A porous substrate according to Example 1 was produced by the production method disclosed in Japanese Patent No. 6924338. In a 100 L vessel, 2052 g of polyethylene glycol 10000, 2160 g of urea, 14.5 g of acetic acid, and 24 kg of water were placed, and then stirred at room temperature for 30 minutes to prepare an aqueous polyethylene glycol solution. The aqueous solution of polyethylene glycol and tetramethoxysilane were fed to a sol solution preparation system including two feed pumps, a static mixer, and a cooling pipe (2°C) at feed rates of 90 mL per minute and 45 mL per minute, respectively, and mixed and cooled in the system to obtain a mixed solution. The mixed solution was collected in a stirring vessel cooled at 15°C, and stirred for 30 minutes. After stirring, the sol solution was fed to a 600 mL vessel, and a mold for molding circular-cylindrical pellets with a diameter of 4.6 mm was placed therein. The resultant was warmed in a bath at 30°C to thereby produce a polysiloxane gel.

Next, the obtained polysiloxane gel was placed in a reaction vessel containing 100 mL of 3 mol/L urea water, and the resultant was heated under reflux for 12 hours. After completion of the reaction, the obtained polysiloxane gel was washed with water, and dried in a drying machine at 60°C for 12 hours. After drying, the dried polysiloxane gel was calcined in an air atmosphere at 600°C for 5 hours to obtain a circular-cylindrical porous substrate with a diameter of 4.6 mm. The length of the obtained porous substrate was adjusted by cutting the porous substrate so as to have an aspect ratio of 1.5.

The structure of the obtained porous substrate was observed using a SEM (JSM-7900F available from JEOL), and as a result, it was confirmed that the porous substrate had a co-continuous structure composed of a silica skeleton 3 including mesopores 4 formed therein and macropores 2 as shown in Fig. 2.

### (2) Support of Amino Compound (Non-Chemical Bond Modification)

As an amino compound, polyethyleneimine 600 (weight average molecular weight 600) was used. 5 g of polyethyleneimine 600 was dissolved in 30 mL of ethanol, and then, 5 g of the porous substrate was added thereto. The resulting mixed solution was left to stand overnight, and brought into a reduced pressure at 70°C to remove ethanol to thereby support the amino compound in the pores of the porous substrate (non-chemical bond modification). In this way, an amino compound-supported porous substrate was obtained.

### Examples 2 to 6

In each example, an amino compound-supported porous substrate was obtained in the same manner as in Example 1, except that the diameter of the porous substrate was changed as shown in Table 1 given below, and that the mass ratio of the amino compound to the porous substrate was changed as shown in Table 1 given below.

### Example 7

An amino compound-supported porous substrate was obtained in the same manner as in Example 1, except that the time of heating under reflux was changed to 5 hours when producing the porous substrate.

### Example 8

An amino compound-supported porous substrate was obtained in the same manner as in Example 1, except that the time of heating under reflux was changed to 24 hours when producing the porous substrate.

### Example 9

An amino compound-supported porous substrate was obtained in the same manner as in Example 1, except that the amount of polyethylene glycol added was changed to 1949 g when producing the porous substrate.

### Example 10

An amino compound-supported porous substrate was obtained in the same manner as in Example 1, except that the amount of polyethylene glycol added was changed to 2155 g when producing the porous substrate.

### Example 11

An amino compound-supported porous substrate was obtained in the same manner as in Example 1, except that the porous substrate produced in Example 1 was pulverized into a powder with a particle size of 8 µm using a mortar.

### Comparative Example 1

### (1) Production of Porous Substrate (Mesoporous Silica)

424.8 g of hydrochloric acid (36 mass%, available from Wako Pure Chemical Industries, Ltd.) was added dropwise to a mixed solution, and the resulting mixed solution was stirred at 35°C for 24 hours. After that, the mixed solution was stirred at 95°C for 24 hours. After stirring, the mixed solution was filtered, and the solid was dried at 120°C to remove moisture. The dried solid was placed in an electric furnace and heated to 550°C at a temperature increasing rate of 10°C/min. Then, the solid was held at the temperature for 6 hours to obtain a mesoporous silica.

Next, 37.5 g of the obtained mesoporous silica, 12.8 g of fumed silica (M5 available from Cabot Corporation), and 29.5 g of water were mixed. At this time, 0.31 g of methylcellulose was added. The resulting mixture was introduced into an extruding granulator (Multi Granulator MG-55-2 available from DALTON Corporation), and granulated at 20 rpm to obtain a circular-cylindrical porous substrate precursor. The porous substrate precursor was dried at 120°C to remove moisture. After that, the dried porous substrate precursor was placed in an electric furnace, and heated to 500°C at a temperature increasing rate of 5°C/min. Then, the porous substrate precursor was held at that temperature for 2 hours to obtain a circular-cylindrical porous substrate. The length of the obtained porous substrate was adjusted by cutting the porous substrate so as to have an aspect ratio of 1.5.

### (2) Support of Amino Compound (Non-Chemical Bond Modification)

An amino compound was supported on the porous substrate in the same manner as in Example 1.

### Comparative Example 2

An amino compound-supported porous substrate was obtained in the same manner as in Comparative Example 1, except that the mass ratio of the amino compound to the porous substrate was changed as shown in Table 1 given below.

### Comparative Example 3

An amino compound-supported porous substrate was obtained in the same manner as in Comparative Example 1, except that the amino compound-supported porous substrate was pulverized into a powder with a particle size of 8 µm using a mortar.

### Comparative Example 4

An amino compound-supported porous substrate was obtained in the same manner as in Comparative Example 3, except that the mass ratio of the amino compound to the porous substrate was changed as shown in Table 1 given below.

### Evaluation

For each of the porous substrates used in Examples and Comparative Examples, the bulk density, the total pore volume Vt, the pore volume of macropores, Vm, the pore volume of mesopores, Vs, the mode of pore size distribution of macropores, Dm, and the mode of pore size distribution of mesopores, Ds, were determined by the following methods.

Also, for each of the amino compound-supported porous substrates obtained in Examples and Comparative Examples, the bulk density, the pore volume of macropores, Vma, the pore volume of mesopores, Vsa, and the total pore volume Va were determined by the same methods as for the porous substrates.

Also, for each of the amino compound-supported porous substrates obtained in Examples and Comparative Examples, the amount of the amino group and the amount of carbon dioxide adsorbed were also determined by the following methods, and the amine efficiency was calculated.

Furthermore, in the case where the porous substrate was a molded article, the compression strength was determined by the following method.

The results are shown in Table 1 given below.

### Bulk Density

The bulk density of each of the porous substrates and the amino compound-supported porous substrates was determined by mercury porosimetry using a mercury porosimeter (Auto Pore IV 9520 available from Micromeritics Instrument Corporation) by the following measurement method under the following measurement conditions.

### Measurement Conditions

Mercury parameters
   Advancing contact angle: 130.0 degrees
   Receding contact angle: 130.0 degrees
   Surface tension: 485.0 mN/m (485.0 dynes/cm)
   Mercury density: 13.5335 g/Ml
Low pressure parameters
   Evacuation pressure: 50 µm Hg
   Evacuation time: 5.0 min
   Mercury injection pressure: 0.0035 MPa
   Equilibrium time: 10 secs
High Pressure parameters
   Equilibrium time: 10 secs
Intrusion volume: adjusted to 25% or more and 90% or less
Measurement environment: 20°C

### Measurement Method

(1) About 0.5 g of sample was weighed and placed in a sample cell, and the weighed value was input.
(2) In a low pressure portion, measurement was performed in a range of 0.0048 to 0.2068 MPa.
(3) In a high pressure portion, measurement was performed in a range of 0.2068 to 255.1060 MPa.
(4) The pore size distribution was calculated on the basis of the mercury injection pressure and the amount of mercury injected.

The steps (2), (3), and (4) were automatically performed using software attached to the system. On the basis of the pore size distribution obtained through calculation described above, the bulk density was calculated using the attached software. The value shown in the item "Bulk Density at 0.0035 MPa" of the software was used as the bulk density.

### Pore Volumes Vt, Vm, Vs, Va, Vma, Vsa, and Va

Each pore volume was determined by mercury porosimetry using a mercury porosimeter (Auto Pore IV 9520 available from Micromeritics Instrument Corporation). In the mercury porosimetry, mercury was intruded into the pores of the porous substrate and the amino compound-supported porous substrate by applying pressure, and the pore volume per unit mass was determined on the basis of the pressure and the amount of mercury intruded. The pore volume per unit mass was multiplied by the bulk density obtained as described above, to thereby obtain a pore volume per unit volume.

Here, the pore volumes of macropores, Vm and Vma, were each obtained by analysis for pores with a diameter of 50 nm or more and 500 µm or less by mercury porosimetry. The pore volumes of mesopores, Vs and Vsa, were each obtained by analysis for pores with a diameter of greater than 2 nm and less than 50 nm by mercury porosimetry. The total pore volumes Vt and Va were each obtained by summing the pore volume of macropores and the pore volume of mesopores.

### Mode of Pore Size Distribution of Macropores, Dm

The mode of pore size distribution of macropores, Dm, was determined by mercury porosimetry using a mercury porosimeter (Auto Pore IV 9520 available from Micromeritics Instrument Corporation). In the mercury porosimetry, mercury was intruded into the pores of the porous substrate by applying pressure, and the pore volume and the specific surface area were determined on the basis of the pressure and the amount of mercury intruded. The pore size was calculated on the basis of the relationship between the pore volume and the specific surface area obtained assuming that the pores were in the shape of a circular cylinder. Here, analysis was performed for pores with a diameter of 50 nm or more and 500 µm or less by mercury porosimetry.

### Mode of Pore Size Distribution of Mesopores, Ds

The mode of pore size distribution of mesopores, Ds, was determined by mercury porosimetry using a mercury porosimeter (Auto Pore IV 9520 available from Micromeritics Instrument Corporation) in the same manner as for the mode of pore size distribution of macropores. Here, analysis was performed for pores with a diameter of greater than 2 nm and less than 50 nm by mercury porosimetry.

### Compression Strength

The porous substrate that had been dried was pressed from its lateral face using a digital hardness meter KHT-40N (pressing diameter 3 mm) available from Fujiwara Scientific Co., Ltd., and a pressure at break (N) was measured. Here, the compression strength test was performed on five porous substrates, and the arithmetic average value of the found values for the five porous substrates was used as the value of compression strength.

### Amount of Amino Group

The amount of the amino group per unit mass of the amino compound-supported porous substrate was quantified using an oxygen/nitrogen/hydrogen element analyzer ONH 836 available from LECO Japan Corporation. The amount of the amino group thus obtained was multiplied by the bulk density of the porous substrate (after the amino compound had been supported) to thereby obtain the amount of amino group per unit volume of the porous substrate.

### Amount of Carbon Dioxide Adsorbed

The amount of carbon dioxide adsorbed was determined using BELCAT II available from Microtrac BEL. 0.1 g of the amino compound-supported porous substrate was placed in a sample cell, and conditioned under a helium flow (50 sccm) at 100°C for 10 minutes. After the conditioning, the temperature of the sample chamber was set to 50°C, and 4 vol% carbon dioxide gas was allowed to flow at 50 sccm for 25 minutes. After that, the flow of carbon dioxide was stopped, and helium was allowed to flow at 50 sccm. Then, the amino compound-supported porous substrate was heated to 100°C at a temperature increasing rate of 5°C/min, and held at that temperature for 15 minutes. The amount of carbon dioxide adsorbed was calculated on the basis of the peak area detected by TCD at that time.

### Amine Efficiency

The amount of carbon dioxide adsorbed found by the method described above was divided by the amount of the amino group per unit mass of the amino compound-supported porous substrate, to thereby obtain the amine efficiency.

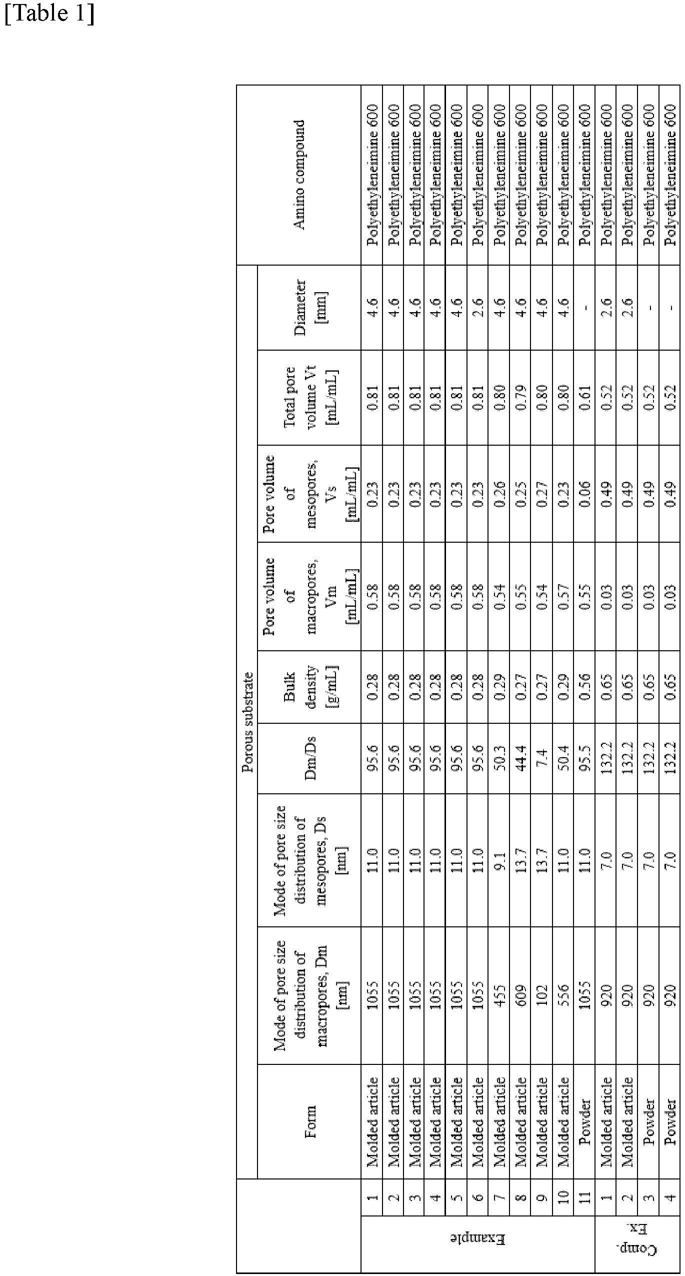

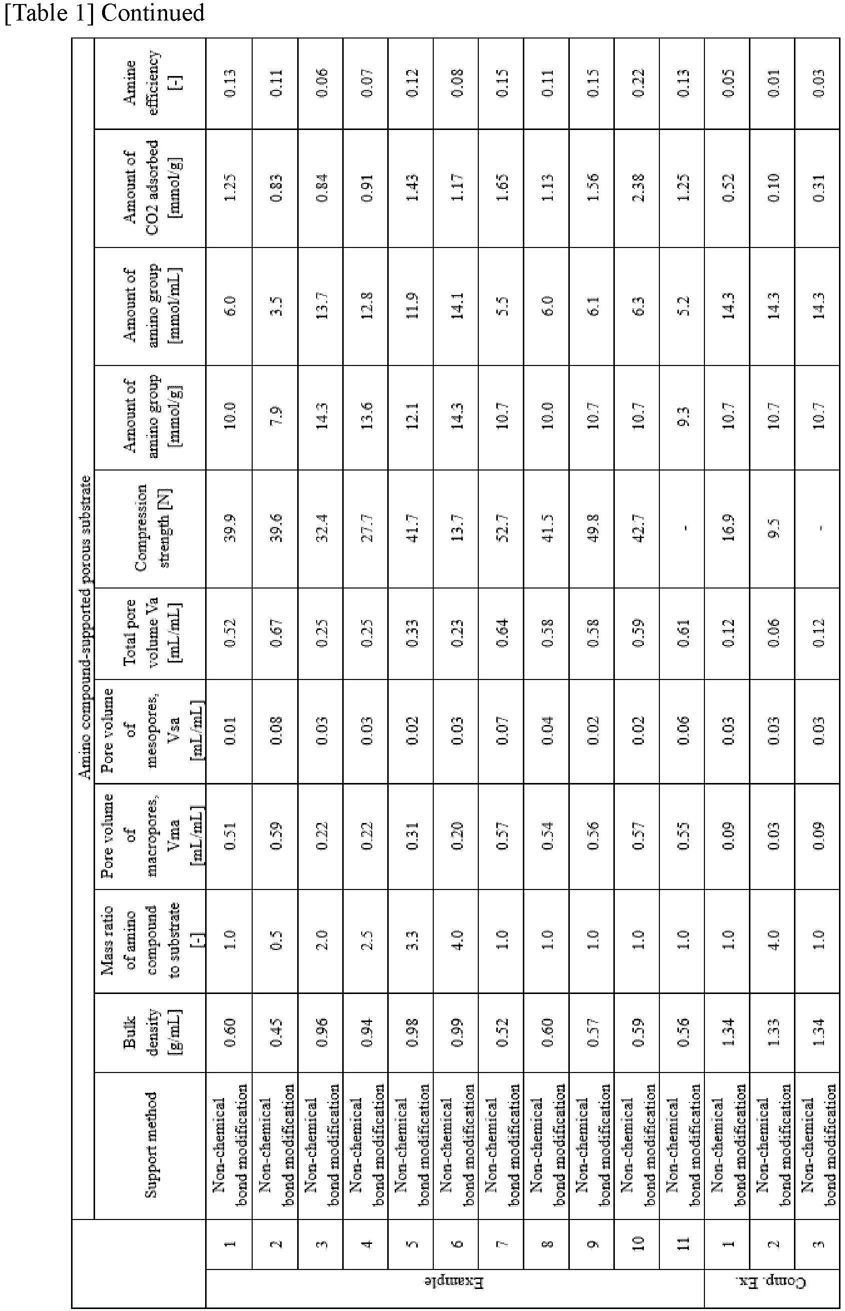

As is clear from the results shown in Table 1, the amino compound-supported porous substrates obtained in Examples exhibited a large amount of carbon dioxide adsorbed and an amine efficiency higher than that of Comparative Examples.

### Examples 12 to 20

In each example, an amino compound-supported porous substrate was obtained in the same manner as in Example 1, except that the pellet diameter of the porous substrate, the type of amino compound supported, and the mass ratio of the amino compound to the porous substrate were changed as shown in Table 2 given below. In Example 18, polyethyleneimine 600 (PEI 600) and triethylenetetramine (TETA) were mixed and used at a mass ratio shown in Table 2.

### Example 21

An amino compound-supported porous substrate was obtained in the same manner as in Example 1, except that 1.25 g of polyethylene glycol was added to 5 g of polyethyleneimine 600.

### Examples 22 and 23

In each example, an amino compound-supported porous substrate was obtained in the same manner as in Example 21, except that the amount of polyethylene glycol added was changed as shown in Table 2 given below.

### Example 24

### (1) Production of Porous Substrate

10.0 g of a porous substrate obtained in the same manner as in Example 1 was placed in a reaction vessel. 40 mL of 0.1% acetic acid aqueous solution, 30 mL of ethanol, and 9.84 g of 3-glycidyloxypropyltrimethoxysilane were added thereto, and then the resultant was heated under reflux at 100°C for 4 hours. After that, the porous substrate was separated from the solution by filtering, washed with about 500 mL of water, and dried to thereby obtain an epoxy-supported porous substrate.

### (2) Support of Amino Compound

Next, the obtained epoxy-supported porous substrate was placed in a reaction vessel. Then, 70 mL of water and 6.66 g of polyethyleneimine (weight average molecular weight 600) were added thereto, and the resultant was heated at 80°C for 4 hours. After heating, the porous substrate was separated from the solution by filtering, washed with about 500 mL of water, and dried to thereby obtain an amino compound-supported porous substrate (chemical bond modification). It is noted that it was difficult to define the mass ratio of the amino compound to the porous substrate in the same manner as in the other examples, and accordingly, the sign "-" is shown in the cell for the "mass ratio of amino compound to porous substrate" in Table 2.

### Example 25

### (1) Production of Porous Substrate

A porous substrate was obtained in the same manner as in Example 1, except for the following: when producing porous substrate, 171 g of polyethylene glycol 10000, 180 g of urea, 1.2 g of acetic acid, and 1650 g of water were used in preparation of the polysiloxane gel; heating under reflux was performed at 90°C for 24 hours; and drying was performed for 20 hours.

### (2) Support of Amino Compound

Next, 1 kg of the obtained porous substrate was placed in a reaction vessel containing 5 L of ion exchange water and 1.17 g of 3-aminopropyltrimethoxysilane, and the resultant was heated under reflux at 90°C for 5 hours. The porous substrate was separated from the aqueous solution by filtering, washed three times with ion exchange water, and dried at 80°C for 20 hours to thereby obtain an amino compound-supported porous substrate (chemical bond modification).

Furthermore, the obtained amino compound-supported porous substrate was impregnated with a solution containing polyethyleneimine 600 in the same manner as in Example 1 to cause polyethyleneimine 600 to be supported on the amino compound-supported porous substrate, to thereby obtain an amino compound-supported porous substrate (chemical bond modification + non-chemical bond modification). It is noted that it was difficult to define the mass ratio of the amino compound to the porous substrate in the same manner as in the other examples, and accordingly, the sign "-" is shown in the cell for the "mass ratio of amino compound to porous substrate" in Table 2.

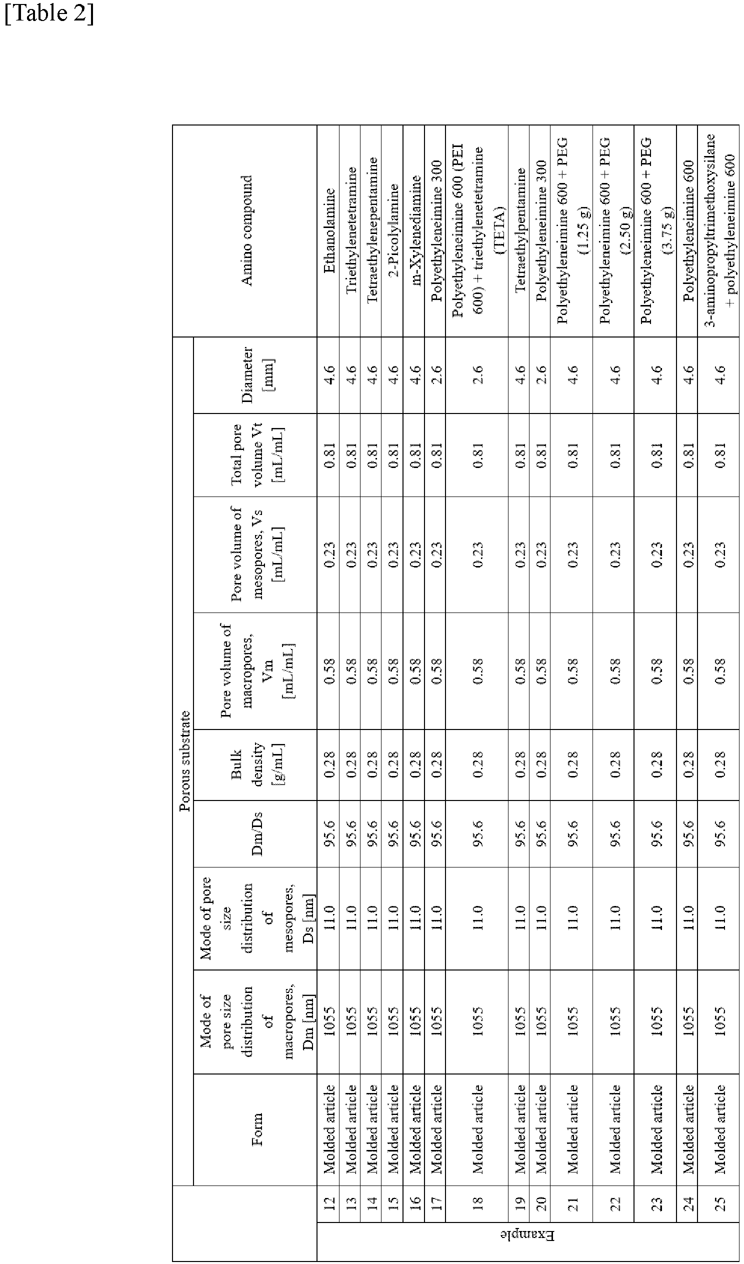

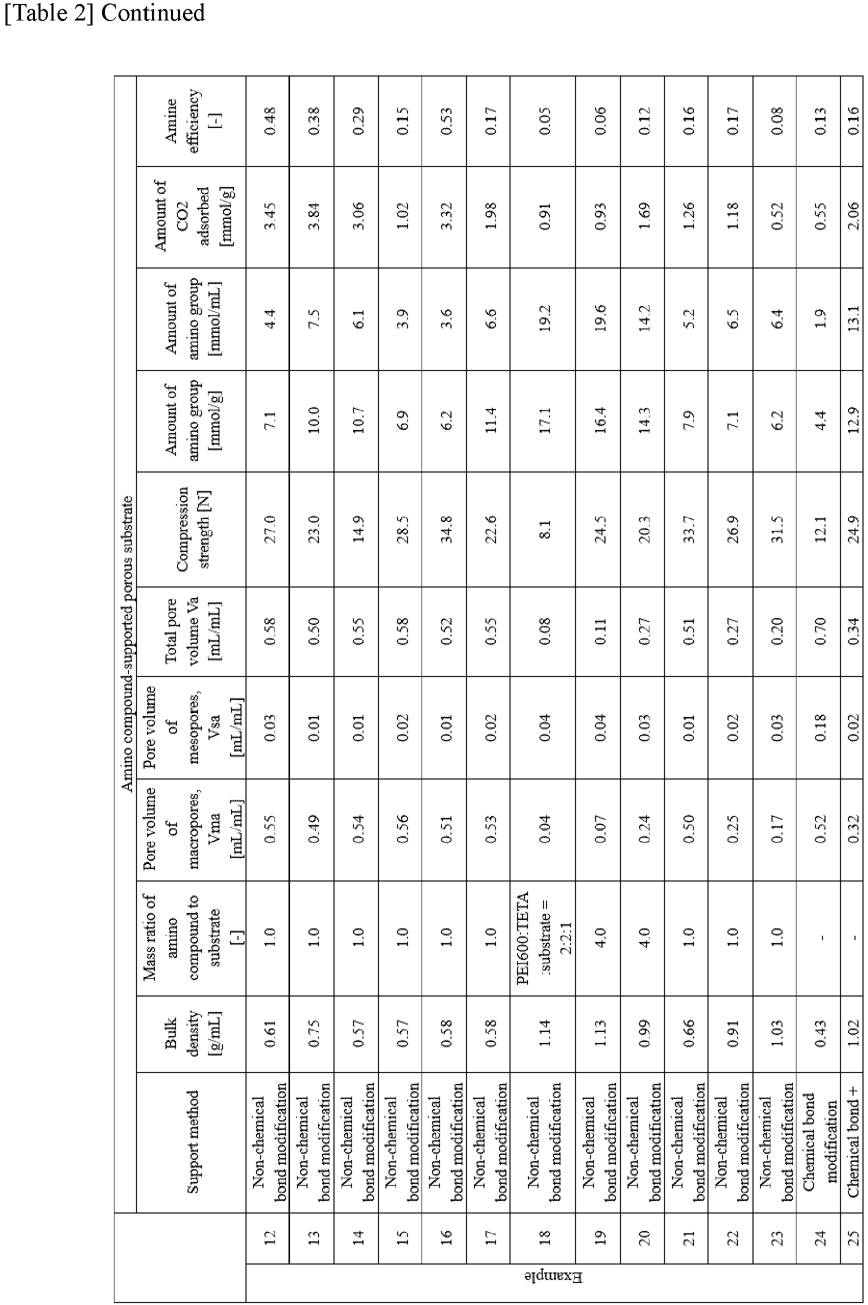

It can be seen from Table 2 that the porous substrate used in the present invention can support various types of amino compounds, and the amino compound-supported porous substrate obtained by using the porous substrate exhibits a large amount of carbon dioxide adsorbed and a high amine efficiency irrespective of the type of amino compound and the supporting method.

### Industrial Applicability

According to the present invention, there can be provided an amino compound-supported porous substrate that has a large pore volume and in which the amino compound can be any of various types. In the amino compound-supported porous substrate, the proportion of the amount of the amino compound that contributes to adsorption performance in the total amount of amino compound supported is higher than that of a conventional adsorbent material that supports the same amino compound. There can be also provided an acid gas adsorbent material including the amino compound-supported porous substrate.

## Claims

1. An amino compound-supported porous substrate comprising:
a porous substrate including at least macropores; and
an amino compound supported in at least some pores of the porous substrate,
wherein the porous substrate has a total pore volume per unit volume of the porous substrate of 0.55 mL/mL or more and 0.95 mL/mL or less, as determined by mercury porosimetry.

2. The amino compound-supported porous substrate according to claim 1,
wherein the porous substrate has a mode of pore size distribution of the macropores of 0.05 µm or more and 3.0 µm or less, as determined in a pore size range of 50 nm or more and 500 µm or less by mercury porosimetry.

3. The amino compound-supported porous substrate according to claim 1 or 2,
wherein the porous substrate has a skeleton containing an element selected from the group consisting of silicon, aluminum, tin, cerium, titanium, and zirconium.

4. The amino compound-supported porous substrate according to claim 1 or 2,
wherein the amino compound-supported porous substrate includes an amino group in an amount, per unit volume of the amino compound-supported porous substrate, of 1.0 mmol/mL or more and 30.0 mmol/mL or less.

5. The amino compound-supported porous substrate according to claim 1 or 2,
wherein the amino compound is at least one selected from the group consisting of a polyamine, a primary amine, a secondary amine, a tertiary amine, a quaternary ammonium, an aromatic amine, and a polyimine.

6. The amino compound-supported porous substrate according to claim 1 or 2,
wherein the amino compound-supported porous substrate has a total pore volume, per unit volume of the amino compound-supported porous substrate, of 0.05 mL/mL or more and 0.80 mL/mL or less, as determined by mercury porosimetry.

7. The amino compound-supported porous substrate according to claim 1 or 2,
wherein the porous substrate further includes mesopores, and
the porous substrate has a co-continuous structure composed of: a skeleton including the mesopores formed therein; and the macropores.

8. The amino compound-supported porous substrate according to claim 7,
wherein the porous substrate has a ratio of a mode of pore size distribution of the macropores to a mode of pore size distribution of the mesopores of 5 or more and 200 or less.

9. The amino compound-supported porous substrate according to claim 1 or 2,
wherein the porous substrate is a molded article.

10. The amino compound-supported porous substrate according to claim 9,
wherein the molded article is a columnar body and has an average diameter of 1.5 mm or more and 20 mm or less.

11. The amino compound-supported porous substrate according to claim 9,
wherein the amino compound-supported porous substrate has a compression strength of 5 N or more.

12. An acid gas adsorbent material comprising the amino compound-supported porous substrate according to claim 1 or 2.
